# EUROPEAN PATENT SPECIFICATION

(11) **EP 1 527 680 B1**
(45) Date of publication and mention of the grant of the patent: **28.02.2007**
(21) Application number: 04077797.1
(22) Date of filing: 11.10.2004
(51) Int. Cl.: A01K 5/02

(54) **A device for and a method of automatically supplying feed to an animal**
Vorrichtung und Verfahren zum automatischen Zuführen von Futter für Tiere
Dispositif et procédé de distribution automatique d'alimentation pour animaux

(30) Priority: 31.10.2003 NL 1024675
(43) Date of publication of application: 04.05.2005
(73) Proprietor: Lely Enterprises AG, 6300 ZUG (CH)
(72) Inventor: Van Den Berg, Karel, 2971 BR Bleskensgraaf (NL); Van Mourik, Jan Dirk, 2611 HH Delft (NL)
(74) Representative: Corten, Maurice Jean F.M.

(56) References cited:
- EP-A- 1 300 073

## Description

The invention relates to a device for automatically supplying feed to an animal according to the preamble of claim 1.

Such a device for automatically supplying feed is known, see e.g. document EP-A-1300073. When an animal reports at the known device, first the identity of the animal is determined. Subsequently, with the aid of the computer, the total amount of nutritional energy and/or a total amount of a feed component that are/is to be offered to the animal in a period having a predetermined length, for example one day, are/is determined. This total amount of nutritional energy and/or a total amount of a feed component depend(s) on particular animal related parameters and is attuned, for example, to the to be expected milk yield or the lactation stage of the animal. The amount of feed to be supplied in the period having a predetermined length is then adapted by the known device in order to ensure that the total amount of nutritional energy and/or a total amount of a feed component is offered to the animal. Consequently, in dependence on the parameters, varying amounts of feed are supplied to the animal in periods having the predetermined length. Although this known device functions properly, there is a continuous need to improve, by adapting the feed supply, the milk production of animals as well as the animal-friendliness of the feeding.

It is an object of the invention to provide a device for automatically supplying feed to an animal, by means of which the above-mentioned needs are fulfilled at least partially.

For this purpose, a device of the above-described type according to the invention comprises the features of the characterizing part of claim 1. Owing to the fact that as the suppliable amount of feed at least the free amount of feed is taken, it is ensured that an animal is always offered at least that amount of feed that this animal usually consumes. The invention is based on the insight that, if animals are allowed freely to consume feed, the free amount of feed an animal consumes in the period having a predetermined length, for example one day, differs per animal. One animal usually consumes a larger amount of feed than another animal. In the known device this is not taken into account and an animal is offered maximally that amount of feed that is needed for obtaining, for example, the desired total amount of nutritional energy. For a particular animal said amount of feed may be smaller than the usual free amount of feed this animal consumes per period. Consequently, this animal feels hungry during a part of the period, which may adversely affect the welfare of the animal and may result in a reduced milk production of milk quality. For another animal the amount of feed to be supplied by the known device for the purpose of obtaining, for example, the desired amount of nutritional energy, may be larger than the usual free amount of feed that animal consumes. In this case, the animal does not completely consume its amount of feed, which is extremely harmful to the health of that animal and which also has an adverse effect on the milk production. The invention obviously improves therein by offering each animal at least that amount (per period having a predetermined length, for example one day) that the animal in question usually freely consumes. For obtaining the total amount of energy content and/or the total content of feed components, such as fats, proteins, minerals and the like, according to the invention sorts of feed may be offered having an energy content and/or a content of feed components adapted to the amount.

In a preferred embodiment of a device according to the invention, the suppliable amount of feed is the free amount of feed. This embodiment is in particular advantageous if the device is used in combination with a milking robot. In order to entice a dairy animal to go to the milking robot, the feed supply can then be stopped temporarily by setting a blocking time for supplying feed to that animal. The animal can then only obtain feed at the milking robot and will therefore sooner be inclined to go to the milking robot. This embodiment has the drawback that then, during the blockage time, free consumption of feed no longer takes place. The development in the free feed consumption can be determined periodically by setting the blocking time at zero. Although an animal will then be less inclined to go to the milking robot, it has been found that because of the udder pressure, which is experienced as unpleasant, the animal still finds its way to the milking robot.

In an alternative embodiment of a device according to the invention, the suppliable amount of feed is unlimited. This makes it possible to follow accurately the development in the free feed consumption by the animal.

It is possible to supply the suppliable amount of feed to the animal in one supply run. However, this has the disadvantage that it may happen that an animal cannot consume the entire amount of feed, for example owing to the fact that it is jostled from the device, for example comprising a feeding parlour, by another animal. Consequently, in an embodiment of a device according to the invention, the computer controls the device in such a way that the suppliable amount of feed is suppliable to the animal in feed portions. When a feed portion is not consumed by the animal in question, the computer is capable of controlling the relevant components in such a way that no possible further feed portions are supplied.

Depending on the measurement accuracy of the relevant device, a feed portion has preferably at least a minimum feed portion size. This means that measurement errors in the case of too small portion sizes, which may result in an inaccurate feeding, are at least avoided to a large extent.

Although the feed portion size may have a pre-set value, the computer preferably calculates a feed portion size of the feed portions. This means that the feed portion size can be adjusted per animal and, if desired, depending on the prevailing circumstances. A feed portion size of approximately 5% of the free amount of feed proves to be extremely suitable.

In order not to discourage an animal from coming to the device for supplying feed, for example comprising a feeding parlour, in an embodiment of a device according to the invention, the computer is provided with a comparing device for comparing the calculated feed portion size with the minimum feed portion size, and, when the comparison result indicates that the calculated feed portion size is smaller than the minimum feed portion size, the computer controls the device in such a way that one minimum feed portion size is supplied to the animal. Thus there is always supplied a minimum feed portion to the animal.

Depending on grazing and/or depending on the last time the dairy animal has been milked or the time it is expected to be milked again, the animal is preferably not supplied with feed. In an embodiment of a device according to the invention, this is achieved in that there is included a blocking time in the memory, the computer only actuating the device to supply feed to the animal after, counted from the last point of time of feed supply to the animal, the blocking time has elapsed. Said blocking time may have a fixed value or be dynamic, i.e. variable, for example animal-dependent, season-dependent, lactation-period-dependent and the like. It is pointed out that the invention is in particular advantageous if no grazing takes place. It is further pointed out that, when the free amount of feed an animal consumes has to be determined, which may take place for example periodically, the blocking time is set at zero.

In order to be able to check whether the animal actually visits the device, for example the feeding parlour, for eating, when an animal is identified by the animal identification means at the device, the computer controls the device in such a way that first one minimum feed portion size is supplied to the animal. When, after the supply of said feed portion the animal leaves the device, no further portions are supplied. This also has the advantage that an animal can eat immediately and does not need to wait a long time until the relevant feed has been composed.

Also when an animal does not consume feed during its visit to the feeding parlour, it is advantageous if the computer stores the points of time when an animal enters and leaves the device in the memory. Said points of time may be used, for example, for behavioural examination, but may also be an indication of the state of health of the animal. For example, when an animal spends a long time at the device without eating, this may be an indication that the animal has no appetite. In an embodiment of a device according to the invention, it is possible to emit a signal and/or to include the animal in an attention list when said time exceeds a particular threshold value.

In an embodiment of a device according to the invention, the measuring means are suitable for determining the amount of feed consumed by the animal following a feed supply. In a further embodiment of a device according to the invention, in which the device is provided with a feeding parlour, the measuring means comprise means for measuring the weight of the feed in the feeding parlour. The measuring means may comprise a weighing device for weighing the amount of feed in the feeding parlour, although other means, such as image identification equipment, are also applicable. It is then also possible for the computer to store in its memory data in relation to the amount of remaining feed present in a feeding parlour. The calculating device can take said value for the remaining feed into account upon determining the feed portion to be supplied when the feeding parlour is subsequently visited by a next animal.

In order to take remaining feed present in a feeding parlour further into account, in an embodiment of a device according to the invention, the computer is provided with a comparing device for comparing the amount of remaining feed with a minimum threshold value, the computer only actuating the device to supply feed to the feeding parlour when the comparison indicates that the amount of remaining feed is below the minimum threshold value.

In an embodiment of a device according to the invention, the device is suitable for supplying one or more sorts of feed, each having their own energy content and/or feed component content. This makes it possible to adapt in a simple manner the total energy content and/or content of feed component per animal. If, for example, the same amount of nutritional energy has to be offered per day to two animals one of which consuming a larger free amount of feed than the other, the feed to be offered to the first animal should have a lower energy content than the feed to be offered to the latter animal.

The device is preferably provided with a mixing device for mixing sorts of feed before they are supplied to the animal. Alternatively, the computer controls the device in such a way that at least one (preferably all) sort(s) of feed is/are supplied at least substantially separately from the other sorts of feed (from each other) to the feeding parlour.

The invention can in particular be applied to a device provided with a feeding column with a number of feed troughs, the free amount of feed being suppliable to a feed trough. In order immediately to supply feed to an animal reporting at one of the feed troughs, the computer controls the device in such a way that feed is supplied first to that feed trough where an animal has been identified most recently by the animal identification means.

In an advantageous embodiment of a device according to the invention, the feeding station and/or the feeding column are/is provided with a receptacle, the conveying means comprising a first conveyor for conveying an amount of feed from the hopper to the receptacle and a second conveyor for conveying the amount of feed from the receptacle to a feed trough. The receptacle is preferably provided with a weighing device for measuring feed present in the receptacle. This makes it possible to determine the amount of feed that can be supplied to the feed trough.

Although the feed may be taken from the receptacle by means of a separate taking-out device, for the sake of simplicity of the construction it is advantageous if there is not used a separate device for taking out. There may be used a tiltable receptacle, fodder falling from said receptacle after the latter has been tilted. However, in order to improve the hygienic use of the feeding station and/or the feeding column, the receptacle preferably has a bottom which is adapted to be opened. The receptacle is preferably provided with a control device for controlling the opening of the bottom. It has proved to be particularly suitable if the second conveyor is a tube-shaped chute or a channel-shaped chute.

In order to prevent that an animal keeps waiting at a feed trough after having been fed, in an embodiment of a device according to the invention, the feed trough is a feed trough which is adapted to be closed by a closing element, the control device (for example the computer) also being suitable for controlling the operation of the closing element.

In a further embodiment of a device according to the invention, the predetermined length of the period is animal-dependent and/or lactation-period-dependent and/or season-dependent and/or weather-dependent. This means that an optimal feed supply per animal can be obtained.

In an embodiment of a device according to the invention, the measuring means for determining the free amount of feed are capable of determining the average free amount of feed consumed by the animal in an N-number of periods having the predetermined length, N being a natural number greater than two. This means that a rather reliable value for the free amount of feed can be obtained. The average free amount of feed is in particular the progressive average free amount of feed, i.e. the average of the free amount of feed consumed during only an M-number of most recent periods having the predetermined length, for example the most recent M-days, M preferably lying between 5 and 10. It is pointed out here that the M-days do not necessarily have to be days following each other uninterruptedly.

The invention also relates to a method of automatically supplying feed to an animal, which method comprises the step of identifying an animal, and the step of supplying a suppliable amount of feed to the animal in a period having a predetermined length, which amount of feed contains a predetermined total amount of nutritional energy and/or a predetermined total amount of a feed component, characterized in that the method comprises the step of determining the free amount of feed the animal has freely consumed in a period having the predetermined length, and in that at least the free amount of feed is taken as the suppliable amount of feed.

The free amount of feed is preferably taken as the suppliable amount of feed. In an alternative embodiment, the suppliable amount of feed is unlimited.

In an embodiment of a method according to the invention, the free amount of feed is determined as the average free amount of feed the animal has freely consumed over a number of preceding periods having the predetermined length.

For determining the average free amount of feed, preferably only the free feed consumption of a number of most recent periods having the predetermined length is taken.

In a further embodiment of a method according to the invention, the method comprises the step of composing the feed to be supplied from one or more sorts of feed, each having their own energy content and/or feed component content. In particular, the composition of the feed to be supplied is performed at least partially on the basis of the determined free amount of feed.

In a favourable embodiment of a method according to the invention, one day is taken as the predetermined period.

The invention will now be explained in further detail with reference to an embodiment shown in the drawing, in which:
Figure 1 is a schematic cross-sectional view of an embodiment of a device according to the invention in the form of a feeding column;
Figure 2 is a schematic side view of an embodiment of a device according to the invention in the form of a milking box;
Figure 3 shows a first embodiment of means for measuring the amount of a sort of feed consumed by an animal in a feeding column and/or a feeding station according to the invention;
Figure 4 shows a second embodiment of means for measuring the amount of a sort of feed consumed by an animal in a feeding column and/or a feeding station according to the invention;
Figure 5 shows a third embodiment of means for measuring the amount of a sort of feed consumed by an animal in a feeding column and/or a feeding station according to the invention;
Figure 6 shows a fourth embodiment of means for measuring the amount of a sort of feed consumed by an animal in a feeding column and/or a feeding station according to the invention, and
Figure 7 shows a fifth embodiment of means for measuring the amount of a sort of feed consumed by an animal in a feeding column and/or a feeding station according to the invention.

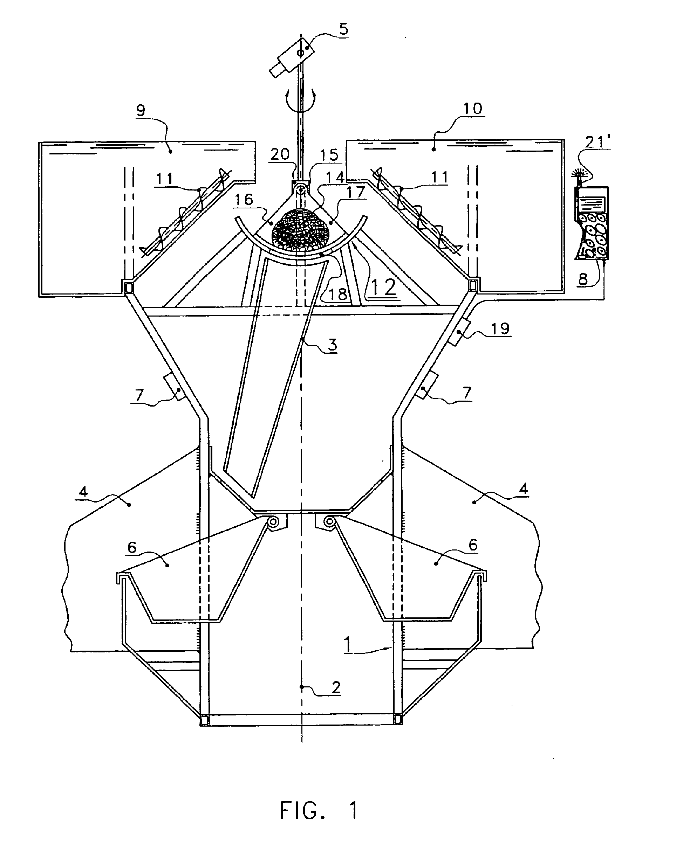

Figure 1 shows an embodiment of a device according to the invention in the form of a feeding column with several feed troughs. However, it will be obvious that the invention is not limited to the embodiment of the device for automatically supplying feed to an animal in the form of a feeding column, but that all other devices known per se for automatically supplying feed to an animal are applicable within the scope of the invention. A framework 1, having a substantially circular circumference, is disposed around a central axis 2. A number of hoppers 9, 10 (two of which are shown in the drawing) are located at the upper side of the framework 1. For this purpose, not further shown facilities are fitted to the framework 1 for placing the hoppers 9, 10. Each hopper 9, 10 contains a particular sort of feed.

The framework 1 is provided with partitions 4 which are detachably disposed on the framework 1.

Feed troughs 6 for the animals are disposed in a circular arrangement in the lower part of the feeding column. By means of the geometry of the feeding column, it is achieved that the construction occupies little space, while the accessibility of the feeding column to the animals is optimal from all directions.

The feeding column further comprises conveying means comprising a first conveyor 11 and a second conveyor 3 for conveying feed from the hopper 9, respectively 10 to the relevant feed trough 6. The feed can be conveyed directly from the hoppers 9, 10 to the feed troughs 6. In the embodiment shown there is provided a receptacle 12, for example centrally located, receiving an amount of feed conveyed by the first conveyor 11 from the hopper 9, 10 to the receptacle 12. As a first conveyor 11, an auger, gripper, belt conveyor or any other device known per se for conveying feed may be used.

A second conveyor 3, preferably a tube-shaped chute or a channel-shaped chute, is suitable for conveying the amount of feed from the receptacle 12 to the relevant feed trough 6. In order to convey the feed to the relevant feed trough 6, it is advantageous if the tube-shaped chute 3 is rotatably mounted in the feeding column. The tube-shaped chute or the channel-shaped chute is preferably made of stainless steel.

The feeding column is provided with a second control device 19. Said second control device 19 controls, under the control of a computer 8 (to which it is connected, for example through a line), the components of the feeding column in such a way that sorts of feed with a particular energy content and/or a particular content of feed components are supplied, in a particular sequence and/or ratio and in a particular amount, to the feed trough 6, the free amount of feed an animal consumes and the desired total amount of energy and/or feed component being taken into account, of course.

The feeding column may be provided with feed-determining means 5 for determining the sort of feed in a hopper 9, 10. Such feed-determining means may comprise, for example, an olfactometer, a colour meter or image identification equipment (such as described, for example, in U.S. patent 4,843,561).

For the purpose of conveying an amount of a sort of feed 14 to the tube-shaped chute 3, the receptacle 12 has a bottom which is adapted to be opened. In the embodiment shown, this is realised in that the bottom of the receptacle 12 has two halves 16 and 17 which are hingeable about an axis 15. When the halves 16, 17 move away from each other, there is thus created a chute aperture 18 through which the amount of a sort of feed 14 falls into the tube-shaped chute 3.

The second control device 19, although another control device may serve as well for the purpose, controls the opening of the bottom of the receptacle 12. Said second control device 19 preferably also controls the sequence of functioning of the first and second conveyors 11 respectively 3, so that the supply of the sorts of feed can take place quickly.

There are provided identification means 7 for identifying an individual animal. In the embodiment shown, the identification means 7 are disposed on the framework 1, but it will be obvious that the identification means can also be disposed at other places, such as, for example, the feed troughs 6. With the aid of the identification means 7, the presence of an animal at the feed trough is detected automatically, and the identity of an animal present at a feed trough 6 is determined automatically. With the aid of data previously stored (and continuously updated, if desired) in the memory of, for example, the computer 8, the amounts of sorts of feed intended for that animal can then be supplied in a particular ratio and/or sequence. With the aid of a weighing device 20 known per se, the amount conveyed to the receptacle 12 by the first conveyor 11 can then be checked. The second control device 19 further controls, with the aid of data from the computer 8 and the animal identification means 7, the movement of the tube-shaped chute 3, so that the latter is located just over the correct feed trough 6. The second control device 19 further controls, under the control of the computer 8, the drive of the conveyors 11.

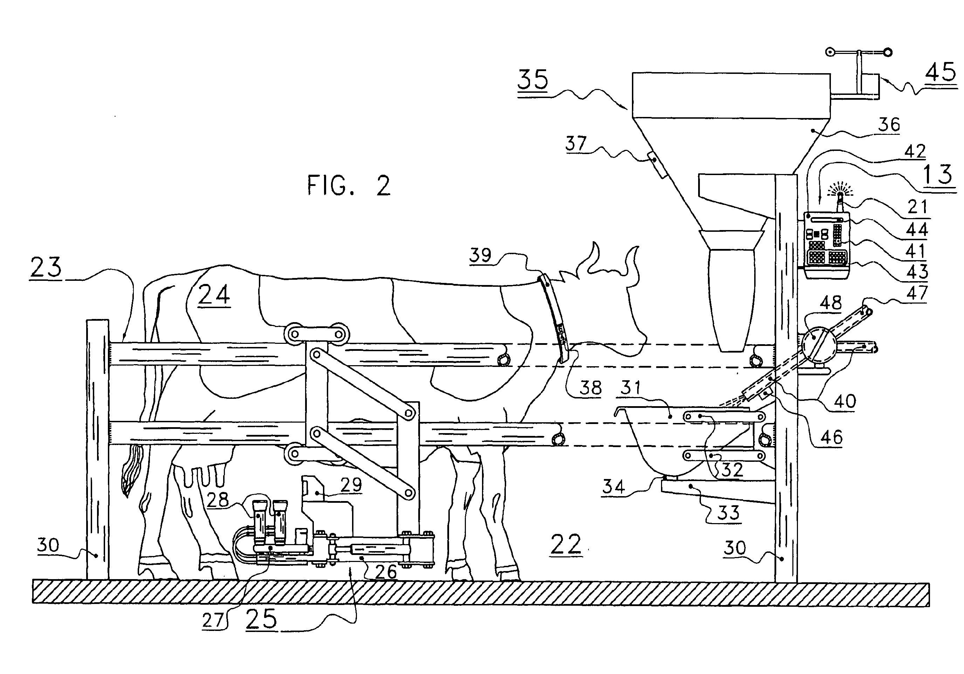

Figure 2 is a side view of an embodiment of a device according to the invention in the form of a milking box 22. The milking box 22 comprises a fencing 23 disposed near the circumference of a cow 24 during her stay in the milking box 22. On one side of the milking box 22 there is disposed a milking robot 25. The milking robot 25 comprises, for example, a robot arm 26 having at its end teat cups 28 supported by a carrier 27. On the robot arm 26 near the teat cups 28 there is further disposed a sensor 29 with the aid of which the position of the teats of a cow to be milked can be determined.

Near the front side of the milking box 22 a feed trough 31 is fastened to a post 30. In the embodiment shown, the feed trough 31 is connected with a post 30 by means of a parallelogram hinge construction 32. The feed trough 31 is supported at its lower side by a supporting beam 33. Between the supporting beam 33 and the lower side of the feed trough 31 there is further disposed a measuring device 34 by means of which the weight of the feed trough 31 with contents can be determined. In the present embodiment, the measuring device 34 comprises a piezo-element. It will be obvious that the invention is not limited to this specific way in which the contents of the feed trough can be measured, and hereinafter some alternative ways of determining the weight of the feed trough with contents will be described.

Over the feed trough 31 there is fitted to the post 30 a feeding station 35 comprising a number of hoppers (not shown in the drawing), each for containing one sort of feed with its own energy content and/or content of feed components, and a tube-shaped chute (analogously to the feeding column as described above). The feeding station 35 comprises a reservoir 36 surrounding the hoppers for the sorts of feed. Against the outer wall of the reservoir 36 there is disposed a receiver 37 constituting part of identification means which are not shown in further detail. The receiver 37 can receive the signals from a transmitter 38 disposed, for example, on a collar 39 around the neck of the cow 24. It will be obvious that different sorts of identification means are applicable in the invention and that the invention is not limited to one sort of identification means. The receiver and the transmitter may further be disposed at different places. The receiver may be disposed, for example, on the feed trough 31 and the transmitter may be implanted in the cow.

Near the upper side of the feed trough 31 there is further fitted to the post 30 a liquid-supplying device 40, for example a sprayer, with the aid of which an amount of liquid, for example water, or a viscous liquid, such as syrup or treacle, can be added to the feed present in the feed trough 31.

The device operates as follows:

After the cow 24 has entered the milking box 22 and the transmitter 38 has come into the receiving range of the receiver 37, the cow 24 is identified automatically by the identification means. In a memory 41 of a computer 42, belonging to a first control device 13, there are stored per cow data in relation to the sorts of feed and the amount thereof a relevant animal is offered per feeding, the free amount of feed and the desired total energy content and/or content of feed components being taken into account, of course. The first control device 13 is controlled by the computer 8 which is, for example, connected in a wireless manner with the first control device 13. For this purpose, each control device as well as the computer is provided with a transmitter-receiver 21, 21'.

When a cow 24 has been identified, the identification means send a signal to the computer 42 which, with the aid of the data stored in the memory 41, controls the feeding station 35 in such a way that an amount (portion size) and ratio of sorts of feed belonging to the cow 24 are supplied, if desired, in a particular sequence.

Data, if any, for the first use of the device according to the invention can be inputted into the memory 41 by making use of inputting means, such as a keyboard 43. For facilitating the input and for checking the functioning of the device during the use thereof, the computer 42 comprises a display screen 44.

The feeding station preferably comprises measuring means 45 for measuring the atmospheric conditions, such as temperature, air humidity, atmospheric pressure, wind speed and the like.

In the embodiment described, after a visit of a cow to the milking box, the following data are thus stored in the memory: the amount consumed per sort of feed, the temperature, the air humidity, the atmospheric pressure, the wind speed, the milk yield and possibly the sequence of sorts of feed supplied. When a cow has consumed all the feed supplied, these data are processed in the memory by the computer.

When the cow has not consumed all the feed, this can be taken into account at the cow's next visit to the milking box (or to another feeding station).

The liquid-supplying device 40 may be provided with a heating device or cooling device 46 for the liquid. The operation of the heating/cooling device 46 can also be controlled by the computer 42.

The device is provided with an additive device 47 for adding additives to the feed. Said additive device can be controlled by the computer 42, which controls, for example, a valve 48 in dependence on data from the identification means and data from the memory 41. This means that particular additives, such as medicines and the like, can be added automatically to the feed for each individual cow.

By means of the measuring device 34, it is further determined how much feed a relevant cow has consumed during the feeding time. The amount of the sort of feed and the amount of liquid added can also be determined separately. These data can be used for continuously updating the data in the memory and, if desired, adapting them to a changing eating behaviour of the cow.

As mentioned in the foregoing, some alternatives for determining the weight of a feed trough, in particular the amount of feed present therein, will now be described.

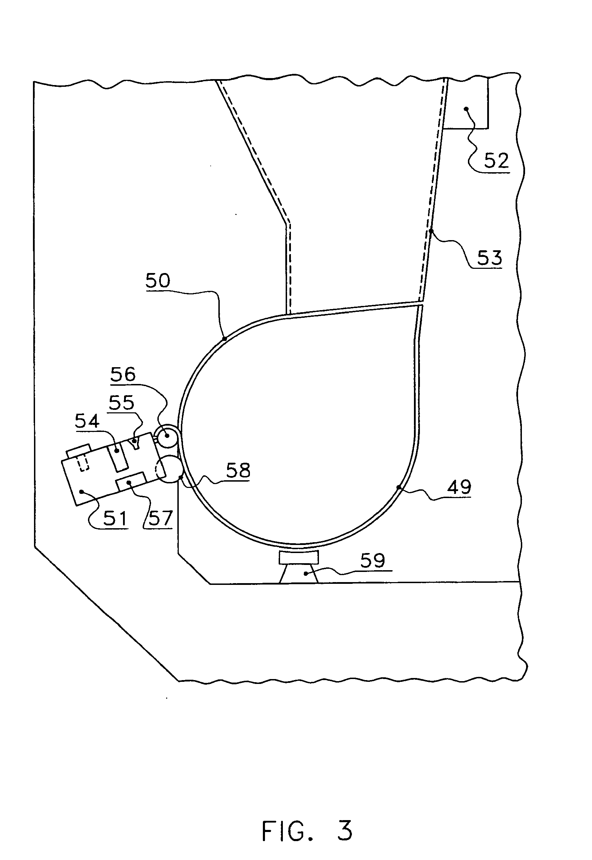

Figure 3 shows schematically a first embodiment of a feed trough 49 for containing feed. An entrance opening 50 gives an animal, for example but not exclusively a cow, access to the feed trough 49. An identification device known per se, i.e. an animal identification device 51, is disposed near the feed trough 49 and recognises a particular animal approaching the feed trough 49 and wishing to make use of it. With the aid of data from the animal identification device 51, a control device 52 supplies an amount of a particular sort of feed to the feed trough 49, the amount of said sort of feed falling into the feed trough 49 via, for example, a tube-shaped chute 53.

By weighing the amount of the sort of feed present in the feed trough, it can be determined how much of a particular sort of feed is consumed by a particular animal, and also whether remaining feed is present in the feed trough. The means for weighing the feed present in the feed trough are preferably connected with the control device for supplying, with the aid of data both from the animal identification device and the means for weighing, an amount of a sort of feed to the feed trough, it thus being possible to take the amount of a sort of feed left by the previous animal into account.

In Figure 3 the means for weighing the feed present in the feed trough 49 comprise a feed trough 49 which is pivotable about a pivot axis 56. The degree of pivoting is determined by the weight of the feed present in the feed trough 49. There is provided a device 57 for determining the degree of pivoting of the feed trough 49, and for deducing therefrom the weight of the feed present in the feed trough 49. The device 57 for determining the degree of pivoting of the feed trough 49 comprises a measuring roll 58 which is in contact with the feed trough. From the degree of rotation of the measuring roll 58 the degree of pivoting and thus the amount of feed in the feed trough 49 can be determined.

Owing to the fact that the device 57, 58 for determining the degree of pivoting of the feed trough 49 is integrated in the animal identification device 51, there is obtained a compact construction.

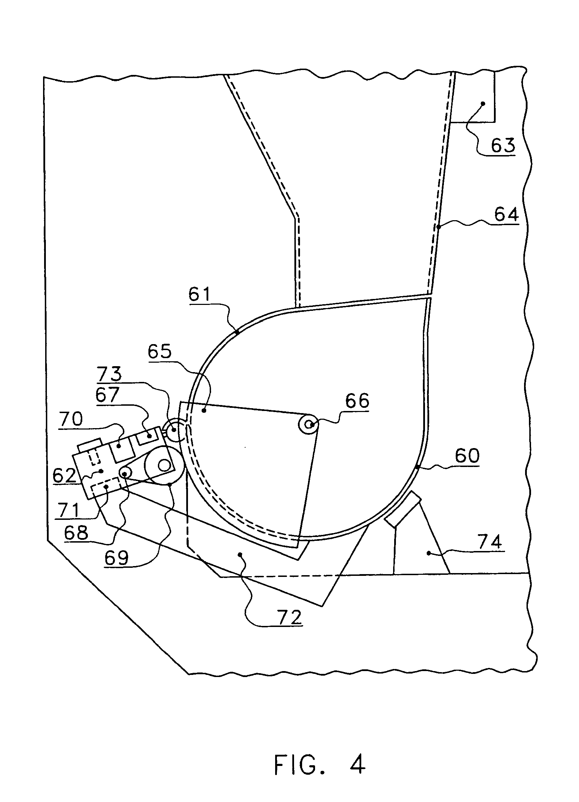

Alternatively or additionally, as shown in Figure 4, the pivoting-determination device 70 for determining the degree of pivoting of the feed trough 60, and for deducing therefrom the weight of the feed present in the feed trough 60, may comprise a dynamometer 71. In the embodiment shown, the feed trough 60 bears on the dynamometer 71 via a supporting arm 72. In this situation the feed trough 60 pivots about a pivot axis 73. The dynamometer 71 is preferably included in the animal identification device 62.

In the embodiments shown in Figures 3 and 4, even small differences in weight can be measured, because of the fact that the pivot axes 56, 73, respectively and the measuring roll 58 and the dynamometer 71, respectively are located at a small distance from each other.

In order to prevent in undesired cases of malfunction, for example when the animal pushes the feed trough downwards with force, the measuring roll, the dynamometer or the like from being damaged, in both embodiments there may be provided a safety support cam 59 (Figure 3), respectively 74 (Figure 4), for supporting the feed trough 49; 60.

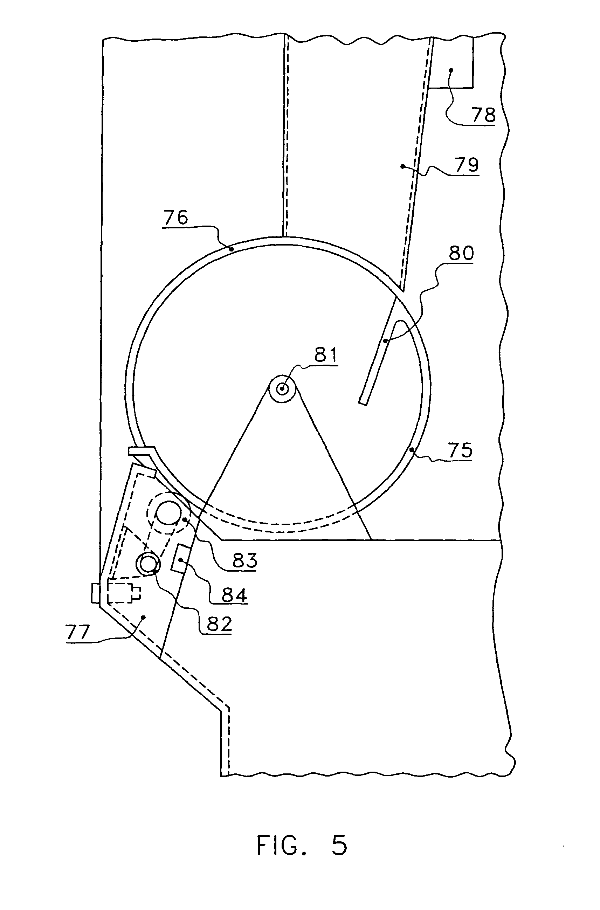

In the third embodiment, as shown schematically in Figure 5, the means for weighing the feed present in the feed unit comprise a movable feed trough 75. The feed trough 75 is moved in a reciprocating manner by the motor 82 by which the roll 83 is driven. As a result of this movement there is created a torque, whose magnitude is determined by a device 84 for measuring the magnitude of the torque. From the torque determined the device 84 deduces the weight of the amount of a sort of feed present in the feed trough. The exact correlation between torque and amount of feed can previously be determined by simple calibration tests.

The embodiment according to Figure 5 has a compact construction because of the fact that the motor 82 for moving the feed trough 75, and the device 84 for measuring the magnitude of the torque during moving and for deducing the weight of the amount of the sort of feed present in the feed trough 75 from the measured magnitude of the torque, are integrated in the animal identification device 77.

The feed trough may be provided with means for holding back an animal wishing to make use of the feed trough at an undesired point of time, or preventing that animal or making it impossible for that animal to make further use of the feed trough (for example for the remaining sorts of feed), with the aid of data from the animal identification device. This makes it possible to deter, in a simple, efficient and cheap manner, animals which are not eligible to be fed from putting their heads into the feed trough, and to teach an animal first to consume the sort of feed present in the feed trough before another sort of feed is offered.

In the first embodiment shown in Figure 3, the means for holding back an animal comprise a loudspeaker 55 for issuing an animal-deterring sound. Alternatively or additionally, the means for holding back an animal may comprise a lighting device 54 for producing an animal-deterring light. In particular if several feed troughs are juxtaposed, the use of deterring light is recommendable, because this light can be focussed such that it only produces an effect on one particular feed trough.

In the second embodiment according to Figure 4, the means for holding back an animal comprise a closing element 65 which is movable across the entrance opening 61. When the closing element 65 is moved across the entrance opening 61, the contents of the feed trough 60 can be made inaccessible to a particular animal. In the embodiment shown, the closing element 65 is a vessel-shaped element which is capable of rotating about an axis 66. Said axis 66 may be a motor-driven axis, said motor being controlled with the aid of data from the animal identification device 62.

Additionally, there may be provided a voltage-supplying device 67 for supplying an animal-deterring electric tension to the closing element 65. Non-eligible animals approaching the feed trough 60 often make contact with the feed trough 60. They will in particular touch the closing element 65 with their noses. By connecting precisely those components of the feed trough that are regularly touched by animals with the voltage-supplying device 67, it is possible to deter a particular animal very locally. Accordingly, such a voltage-supplying device 67 can also be used per se independently of a closing element.

The second embodiment also comprises a control device 63 and a tube-shaped chute 64 for the feed.

The devices described can be designed extremely compactly if the means for holding back an animal are integrated in the animal identification device. Alternatively, the means for holding back an animal may be separate means.

In the third embodiment according to Figure 5, the closing element is constituted by the feed trough 75 itself which is designed movably. In the shown situation, the feed trough 75 is rotatably disposed about an axis 81, which axis 81 may be a motor-driven axis, said motor being controlled by the animal identification device.

In order to prevent that, in the position in which the feed trough 75 closes the entrance opening 76, feed falls from the feed trough 75, the feed trough 75 is provided with a wall portion 80 for catching remaining feed. Said wall portion 80 can also act as a feed-guiding element for feed supplied through the tube-shaped chute 79 to the feed trough 75.

As described, in the second and third embodiments there is provided a simple but reliable construction because of the fact that the closing element rotates about an axis, the closing element being driven by a motor controlled by the animal identification device. In order to provide, besides a simple but reliable construction, also a compact construction, a roll 69 respectively 83 is preferably driven by a motor 68 respectively 82, said roll 69, 83 being in contact with the closing element 65 respectively 75. In the third embodiment, the feed trough 75 thus bears on the animal identification device 77 via the roll 83.

Although for the roll 83 a separate torque roll may be used, the roll 83 preferably performs both the function of driving the closing element, in this case the feed trough 75 itself, and the function of torque roll or measuring roll. Of course, in the alternative case in which the feed trough 75 is moved by the axis 81 driven by a motor, the torque can also be measured via that motor.

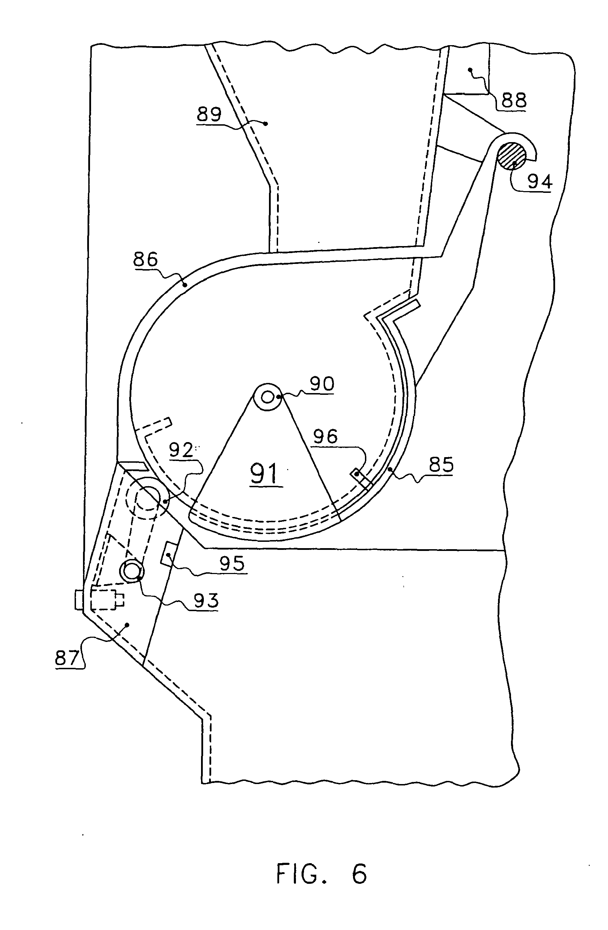

The fourth embodiment, as shown in Figure 6, comprises means for holding back, with the aid of data from the animal identification device 87, an animal wishing to make use of the feed trough 85, as well as means for weighing the feed present in the feed trough 85.

The means for holding back are constituted by a separate closing element 91, which is rotatable about an axis 90. The closing element 91 is set in rotation by a roll 92, which is capable of coming into contact with the closing element 91, and is driven by a motor 93, which is controlled by the animal identification device 87. This makes it possible, for example, to refuse access to a feed trough to an animal jostling another animal from that feed trough.

In this embodiment, the weighing means are constituted by a feed trough 85 which is rotatable about an axis 94. The feed unit 85 can be brought into contact with the roll 92, and is subjected to a reciprocating movement by correct operation of the motor 93 by which the roll 92 is driven. By the movement of the feed trough 85 there is generated a torque which can be measured by the torque-measuring device 95.

In the situation shown in Figure 6, the roll 92 makes contact with the feed trough 85, and the latter can be set in motion to determine the amount of the sort of feed present in the feed trough 85. After an animal has consumed the sort of feed, the amount of remaining sort of feed can be determined by torque measurement. Then the roll 92 is controlled by the motor 93 in such a way that it partially covers the entrance opening 86. A catching device 96 on the feed trough 85 takes along the closing element 91 until the latter comes into contact with the roll 92. Then the roll 92 controls the closing element 91 in such a way that the latter covers the entire entrance opening 86. Owing to the fact that the feed trough 85 is no longer in contact with the roll 92, it falls back to the starting position in which a next sort of feed can be supplied, if desired, via the tube-shaped chute or channel-shaped chute 89.

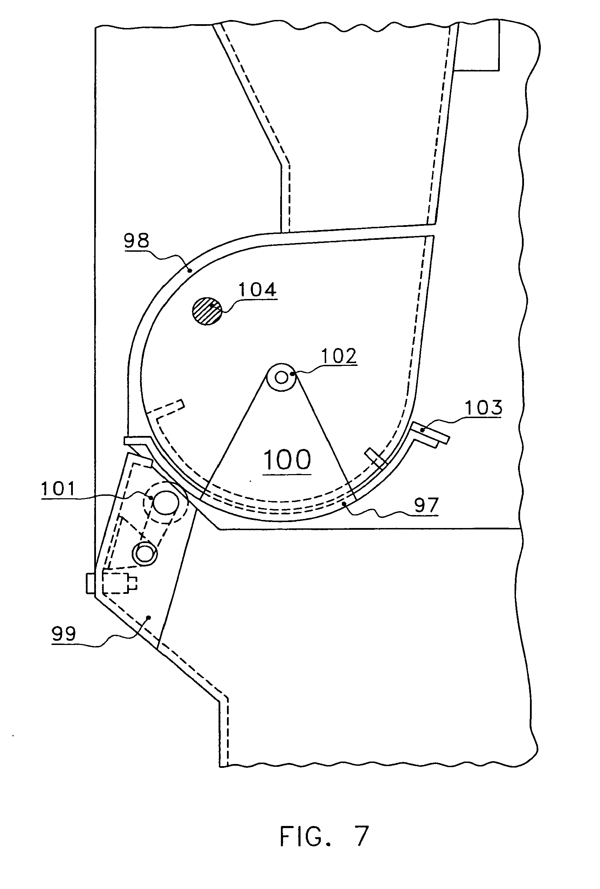

The fifth embodiment according to Figure 7 differs from that of Figure 6 by the location of the pivot axis 104 about which the feed trough 97 rotates. The pivot axis 104 is disposed close to the roll 101 for driving the feed trough 97 and measuring the torque, for the purpose of measuring very small differences in amount of feed. There is also provided a stop 103 in order to prevent superfluous movement of the feed trough 97. The closing element 100 for closing the entrance opening 98 pivots about the axis 102.

According to the invention, the supply of feed to a feed trough (or to another sort of feeding place) is performed depending on the free feed consumption of an animal in a period having a predetermined length, for example one day (although other periods are also possible). For the purpose of determining the free amount of feed consumed by an animal, the device for supplying feed is controlled in such a way that feed is supplied unlimitedly to the animal during a period having the predetermined length. With the aid of the measuring means for measuring the amount of feed consumed by the animal, the consumption data are supplied to the computer 8 which determines the total free amount of feed consumed. Such a determination may take place periodically in order to be able to take a possible development in the eating behaviour of the animal into account. Furthermore, it is known to input into the computer, in a manner known per se, data in relation to the total desired amount of nutritional energy and/or content of feed component that has to be offered to that animal in the period having the predetermined length, in dependence on animal related parameters, for example the to be expected milk yield, lactation stage and the like. According to the invention, these data are used to offer always the free amount of feed to the animal, whilst adapting the energy content and/or content of feed component of the offered feed in such a way that the total desired amount of nutritional energy and/or content of feed component is offered. Said amount of feed is supplied to the animal, under the control of the computer 8, preferably in feed portions which are distributed over the period having the predetermined length.

By way of example, a particular cow is described to which feed has been supplied unlimitedly during five successive days. The feed consisted of a mixture of concentrate, silage, maize and brewer's grains. It is pointed out here that the free feed consumption depends, of course, on the sort of feed offered, but it will be obvious that, by means of the device and method according to the invention, it is possible to determine the consumption of the free amount of feed for all sorts of feed. By measuring the amount of feed freely consumed by that cow it has been found that the average amount of feed consumed per day is 45 kg. Said value will be used by the computer to offer that animal 45 kg of feed per day. Said feed will be offered in the form of portions having a size of approximately 5%, i.e. approximately 2 kg in the present case. There is further chosen a minimum portion size of 200 grams. It will be obvious that, in dependence on the size of the device and the measurement accuracy, other values can be taken.

When a cow reports at the feed trough, she will always be offered a first portion which is equal to the minimum portion size; this serves to verify whether the cow actually wishes to eat. When the cow has consumed the minimum portion size, a usual portion will be supplied to her.

It is pointed out that, on the basis of the data present in the computer in relation to the total amount of nutritional energy and/or the total amount feed component that have to be offered to that cow per day, the computer controls the device in such a way that the mutual ratio of the sorts of feed to be offered is such that said amount of nutritional energy and/or the total amount of feed component is attained by means of the determined free amount of feed, i.e. 45 kg in the present embodiment. In the described embodiment, a total of 12 kg concentrate, 24 kg silage, 6 kg maize and 3 kg brewer's grains is offered to the cow per day.

At the point of time when a cow leaves the feed trough there may still be present an amount of remaining feed. This remaining feed is taken into account at the further determination of the feed supply. Possible filling up of a feed trough is taken into account by the computer by making use of a comparison device for comparing the amount of remaining feed with a minimum threshold value, the computer only actuating the device to supply a sort of feed to the feed trough when the comparison indicates that the amount of remaining feed is below the minimum threshold value.

In an embodiment of a method according to the invention, feed is supplied unlimitedly to an animal, and the free amount of feed consumed by that animal in a period having a predetermined length, for example one day, is each time recorded. On the basis of said data, the energy content and/or the content of feed components of the feed to be supplied is adapted in order to obtain the desired total energy content and/or the desired total content of feed component for said period.

In an alternative embodiment, or according to the farmer's choice, a blocking time of, for example, 30 minutes can be set, which means that within the blocking time, after a feed supply at which a cow has eaten, the cow is not admitted to the feed trough or is not supplied with feed again. Also when the cow is expected at the milking box within the blocking time of half an hour, the access will be refused. The relevant points of time, such as the point of time of feed supply or the point of time when the cow leaves the feed trough (after having eaten or not) are stored. It will be obvious that, when the device is used for determining the free feed consumption, said blocking time is set at zero.

By way of example, if another cow consumes an average free amount of feed of, for example, 38 kg per day, but has to be offered a higher energy content per day, the feed offered per day may consist of 14 kg concentrate, 14 kg silage, 6 kg maize and 4 kg brewer's grains. Consequently, the latter cow is offered food with a higher energy content than the previously mentioned cow.

By updating continuously or periodically the free amount of feed consumed by an animal, a developing animal can be taken into account. When it is found that the daily consumption of a cow increases, then - assuming that the energy requirement does not change - feed having a lower energy content is offered to the cow, so that the condition of the cow, and consequently the milk production, is not adversely affected.

## Claims

1. A device for automatically supplying feed to an animal, the device being provided with an animal identification device for identifying an animal, with a computer for controlling the device for automatically supplying feed to the animal, the device being suitable for supplying, under the control of the computer, a suppliable amount of feed to the animal in a period having a predetermined length, which amount of feed contains a predetermined total amount of nutritional energy and/or a predetermined total amount of a feed component, **characterized in that** the device is suitable for freely supplying, under the control of the computer, feed to the animal in a period having the predetermined length, and **in that** the device is provided with measuring means for measuring the free amount of feed consumed by the animal in the period having the predetermined length, at least the free amount of feed being taken as the suppliable amount of feed.

2. A device as claimed in claim 1, **characterized in that** the suppliable amount of feed is the free amount of feed.

3. A device as claimed in claim 1, **characterized in that** the suppliable amount of feed is unlimited.

4. A device as claimed in claim 1, 2 or 3, **characterized in that** the computer controls the device in such a way that the suppliable amount of feed is suppliable to the animal in feed portions.

5. A device as claimed in claim 4, **characterized in that** a feed portion has at least a minimum feed portion size.

6. A device as claimed in claim 5, **characterized in that** the minimum feed portion size is approximately 5% of the free amount of feed.

7. A device as claimed in any one of the preceding claims, **characterized in that** the measuring means are suitable for determining the amount of feed consumed by the animal following a feed supply.

8. A device as claimed in any one of the preceding claims, **characterized in that** the device is suitable for supplying one or more sorts of feed, each having their own energy content and/or feed component content.

9. A device as claimed in claim 8, **characterized in that** the device is provided with a mixing device for mixing sorts of feed before they are supplied to the animal.

10. A device as claimed in any one of the preceding claims, **characterized in that** the device is provided with at least one feeding column with a feed trough, the free amount of feed being suppliable to the feed trough.

11. A device as claimed in any one of the preceding claims, **characterized in that** the measuring means for determining the free amount of feed are capable of determining the average free amount of feed consumed by the animal in an N-number of periods having the predetermined length, N being a natural number greater than two.

12. A device as claimed in claim 11, **characterized in that** the average free amount of feed is the progressive average free amount of feed.

13. A method of automatically supplying feed to an animal, which method comprises the step of:
identifying an animal,
and supplying a suppliable amount of feed to the animal in a period having a predetermined length, which amount of feed contains a predetermined total amount of nutritional energy and/or a predetermined total amount of a feed component,
**characterized in that** the method comprises the step of
determining the free amount of feed the animal has freely consumed in a period having the predetermined length, and
**in that** at least the free amount of feed is taken as the suppliable amount of feed.

14. A method as claimed in claim 13, **characterized in that** at least the free amount of feed is taken as the suppliable amount of feed.

15. A method as claimed in claim 13, **characterized in that** the suppliable amount of feed is unlimited.

16. A method as claimed in claim 13, 14 or 15, **characterized in that** the free amount of feed is determined as the average free amount of feed the animal has freely consumed over a number of preceding periods having the predetermined length.

17. A method as claimed in claim 16, **characterized in that**, for determining the average free amount of feed, only the free feed consumption of a number of most recent periods having the predetermined length is taken.

18. A method as claimed in any one of claims 13 to 17, **characterized in that** the method comprises the step of composing the feed to be supplied from one or more sorts of feed, each having their own energy content and/or feed component content.

19. A method as claimed in claim 18, **characterized in that** the composition of the feed to be supplied is performed at least partially on the basis of the determined free amount of feed.

20. A method as claimed in any one of claims 13 to 19, **characterized in that** one day is taken as the predetermined period.

## Patentansprüche

1. Vorrichtung zum automatischen Zuführen von Futter zu einem Tier, wobei die Vorrichtung mit einer Tieridentifikationsvorrichtung zum Identifizieren eines Tieres und mit einem Computer zum Steuern der Vorrichtung zum automatischen Zuführen von Futter zu dem Tier versehen ist, wobei die Vorrichtung geeignet ist, dem Tier gesteuert durch einen Computer eine zuführbare Futtermenge in einem Zeitraum von vorgegebener Länge zuzuführen, wobei die Futtermenge eine vorgegebene Gesamtmenge an Nahrungsenergie und/oder eine vorgegebene Gesamtmenge eines Futterbestandteils enthält,
**dadurch gekennzeichnet, daß** die Vorrichtung geeignet ist, dem Tier gesteuert durch den Computer in einem Zeitraum der vorgegebenen Länge Futter frei zuzuführen, und daß die Vorrichtung mit Meßvorrichtungen zum Messen der freien Futtermenge versehen ist, die von dem Tier in dem Zeitraum der vorgegebenen Länge verzehrt wurde, wobei zumindest die freie Futtermenge als zuführbare Futtermenge genommen wird.

2. Vorrichtung nach Anspruch 1,
**dadurch gekennzeichnet, daß** die zuführbare Futtermenge die freie Futtermenge ist.

3. Vorrichtung nach Anspruch 1,
**dadurch gekennzeichnet, daß** die zuführbare Futtermenge unbegrenzt ist.

4. Vorrichtung nach Anspruch 1, 2 oder 3,
**dadurch gekennzeichnet, daß** der Computer die Vorrichtung in der Weise steuert, daß die zuführbare Futtermenge dem Tier in Futterportionen zuführbar ist.

5. Vorrichtung nach Anspruch 4,
**dadurch gekennzeichnet, daß** eine Futterportion zumindest eine minimale Futterportionsgröße aufweist.

6. Vorrichtung nach Anspruch 5,
**dadurch gekennzeichnet, daß** die minimale Futterportionsgröße etwa 5 % der freien Futtermenge beträgt.

7. Vorrichtung nach einem der vorhergehenden Ansprüche,
**dadurch gekennzeichnet, daß** die Meßvorrichtungen geeignet sind, die Futtermenge zu ermitteln, die von dem Tier nach einer Futterzufuhr verzehrt wurde.

8. Vorrichtung nach einem der vorhergehenden Ansprüche,
**dadurch gekennzeichnet, daß** die Vorrichtung geeignet ist, eine oder mehrere Sorten von Futter zuzuführen, von denen jede ihren eigenen Energiegehalt und/oder Futterbestandteilgehalt hat.

9. Vorrichtung nach Anspruch 8,
**dadurch gekennzeichnet, daß** die Vorrichtung mit einer Mischvorrichtung zum Mischen von Futtersorten versehen ist, bevor diese dem Tier zugeführt werden.

10. Vorrichtung nach einem der vorhergehenden Ansprüche,
**dadurch gekennzeichnet, daß** die Vorrichtung mindestens eine Futtersäule mit einem Futtertrog aufweist, wobei die freie Futtermenge dem Futtertrog zuführbar ist.

11. Vorrichtung nach einem der vorhergehenden Ansprüche,
**dadurch gekennzeichnet, daß** die Meßvorrichtungen zum Ermitteln der freien Futtermenge geeignet sind, die durchschnittliche freie Futtermenge zu ermitteln, die von dem Tier in n Zeiträumen der vorgegebenen Länge verzehrt wird, wobei n eine natürliche Zahl größer als zwei ist.

12. Vorrichtung nach Anspruch 11,
**dadurch gekennzeichnet, daß** die durchschnittliche freie Futtermenge die dynamische durchschnittliche freie Futtermenge ist.

13. Verfahren zum automatischen Zuführen von Futter zu einem Tier, wobei das Verfahren den Verfahrensschritt des Identifizierens eines Tieres und des Zuführens einer zuführbaren Futtermenge zu dem Tier in einem Zeitraum von vorgegebener Länge umfaßt, wobei die Futtermenge eine vorgegebene Gesamtmenge an Nahrungsenergie und/oder eine vorgegebene Gesamtmenge eines Futterbestandteiles enthält,
**dadurch gekennzeichnet, daß** das Verfahren den Verfahrensschritt des Ermittelns der freien Futtermenge umfaßt, die das Tier in einem Zeitraum der vorgegebenen Länge frei verzehrt hat, und daß zumindest die freie Futtermenge als zuführbare Futtermenge genommen wird.

14. Verfahren nach Anspruch 13,
**dadurch gekennzeichnet, daß** zumindest die freie Futtermenge als zuführbare Futtermenge genommen wird.

15. Verfahren nach Anspruch 13,
**dadurch gekennzeichnet, daß** die zuführbare Futtermenge unbegrenzt ist.

16. Verfahren nach Anspruch 13, 14 oder 15,
**dadurch gekennzeichnet, daß** die freie Futtermenge als durchschnittliche freie Futtermenge ermittelt wird, die das Tier in einer Anzahl von vorhergehenden Zeiträumen der vorgegebenen Länge frei verzehrt hat.

17. Verfahren nach Anspruch 16,
**dadurch gekennzeichnet, daß** zur Ermittlung der durchschnittlichen freien Futtermenge nur die freie Futteraufnahme in einer Anzahl von unlängst verstrichenen Zeiträumen der vorgegebenen Länge berücksichtigt wird.

18. Verfahren nach einem der Ansprüche 13 bis 17,
**dadurch gekennzeichnet, daß** das Verfahren den Verfahrensschritt des Zusammenstellens des zuzuführenden Futters aus einer oder mehreren Sorten von Futter umfaßt, von denen jede ihren eigenen Energiegehalt und/oder Futterbestandteilgehalt hat.

19. Verfahren nach Anspruch 18,
**dadurch gekennzeichnet, daß** das Zusammenstellen des zuzuführenden Futters zumindest teilweise auf der Basis der ermittelten freien Futtermenge erfolgt.

20. Verfahren nach einem der Ansprüche 13 bis 19,
**dadurch gekennzeichnet, daß** als vorgegebener Zeitraum ein Tag genommen wird.

## Revendications

1. Dispositif de distribution automatique d'alimentation pour animaux, le dispositif étant pourvu d'un dispositif d'identification d'animal pour identifier un animal, d'un ordinateur pour commander le dispositif de distribution automatique d'alimentation pour animaux, le dispositif étant adapté pour distribuer, sur commande de l'ordinateur, une quantité distribuable d'alimentation à l'animal pendant une période ayant une durée prédéterminée, laquelle quantité d'alimentation contient une quantité totale prédéterminée d'énergie nutritionnelle et/ou une quantité totale prédéterminée de composant alimentaire, **caractérisé en ce que** le dispositif est adapté pour distribuer librement, sur commande de l'ordinateur, de l'alimentation à l'animal pendant une période ayant la durée prédéterminée, et **en ce que** le dispositif est pourvu d'instruments de mesure pour mesurer la quantité libre d'alimentation consommée par l'animal pendant la période ayant la durée prédéterminée, au moins la quantité libre d'alimentation étant considérée comme la quantité distribuable d'alimentation.

2. Dispositif selon la revendication 1, **caractérisé en ce que** la quantité distribuable d'alimentation est la quantité libre d'alimentation.

3. Dispositif selon la revendication 1, **caractérisé en ce que** la quantité distribuable d'alimentation est illimitée.

4. Dispositif selon la revendication 1, 2 ou 3, **caractérisé en ce que** l'ordinateur commande le dispositif de telle manière que la quantité distribuable d'alimentation est distribuable à l'animal en portions d'alimentation.

5. Dispositif selon la revendication 4, **caractérisé en ce que** la portion d'alimentation a au moins une taille de portion d'alimentation minimale.

6. Dispositif selon la revendication 5, **caractérisé en ce que** la taille de la portion d'alimentation minimale représente approximativement 5 % de la quantité libre d'alimentation.

7. Dispositif selon l'une quelconque des revendications précédentes, **caractérisé en ce que** les instruments de mesure sont adaptés pour déterminer la quantité d'alimentation consommée par l'animal après une distribution d'alimentation.

8. Dispositif selon l'une quelconque des revendications précédentes, **caractérisé en ce que** le dispositif est adapté pour distribuer une ou plusieurs sortes d'alimentation, chacune ayant leur propre teneur énergétique et/ou teneur en composant alimentaire.

9. Dispositif selon la revendication 8, **caractérisé en ce que** le dispositif est pourvu d'un dispositif de mélange pour mélanger des sortes d'alimentation avant qu'elles ne soient distribuées à l'animal.

10. Dispositif selon l'une quelconque des revendications précédentes, **caractérisé en ce que** le dispositif est pourvu d'au moins une colonne d'alimentation avec une mangeoire, la quantité libre d'alimentation étant distribuable dans la mangeoire.

11. Dispositif selon l'une quelconque des revendications précédentes, **caractérisé en ce que** les instruments de mesure pour déterminer la quantité libre d'alimentation sont capables de déterminer la quantité libre moyenne d'alimentation consommée par l'animal pendant un nombre N de périodes ayant la durée prédéterminée, N étant un entier naturel supérieur à deux.

12. Dispositif selon la revendication 11, **caractérisé en ce que** la quantité libre moyenne d'alimentation est la quantité libre moyenne progressive d'alimentation.

13. Procédé de distribution automatique d'alimentation pour animaux, lequel procédé comprend les étapes consistant à :
identifier un animal,
et distribuer une quantité distribuable d'alimentation à l'animal pendant une période ayant une durée prédéterminée, laquelle quantité d'alimentation contient une quantité totale prédéterminée d'énergie nutritionnelle et/ou une quantité totale prédéterminée d'un composant alimentaire,
**caractérisé en ce que** le procédé comprend l'étape consistant à
déterminer la quantité libre d'alimentation que l'animal a librement consommée pendant une période ayant la durée prédéterminée, et
**en ce qu'**au moins la quantité libre d'alimentation est considérée comme la quantité distribuable d'alimentation.

14. Procédé selon la revendication 13, **caractérisé en ce qu'**au moins la quantité libre d'alimentation est considérée comme la quantité distribuable d'alimentation.

15. Procédé selon la revendication 13, **caractérisé en ce que** la quantité distribuable d'alimentation est illimitée.

16. Procédé selon la revendication 13, 14 ou 15, **caractérisé en ce que** la quantité libre d'alimentation est déterminée comme étant la quantité libre moyenne d'alimentation que l'animal a librement consommée pendant un nombre de périodes précédentes ayant la durée prédéterminée.

17. Procédé selon la revendication 16, **caractérisé en ce que**, pour déterminer la quantité libre moyenne d'alimentation, seule la consommation libre d'alimentation d'un nombre de périodes les plus récentes ayant la durée prédéterminée est prise en considération.

18. Procédé selon l'une quelconque des revendications 13 à 17, **caractérisé en ce que** le procédé comprend l'étape consistant à composer l'alimentation à distribuer à partir d'une ou plusieurs sortes d'alimentation, chacune ayant leur propre teneur énergétique et/ou teneur en composant alimentaire.

19. Procédé selon la revendication 18, **caractérisé en ce que** la composition de l'alimentation à distribuer est effectuée au moins partiellement sur la base de la quantité libre déterminée d'alimentation.

20. Procédé selon l'une quelconque des revendications 13 à 19, **caractérisé en ce qu'**un jour est considéré comme la période prédéterminée.
